# EUROPÄISCHE PATENTSCHRIFT

(11) **EP 2 273 760 B1**
(45) Veröffentlichungstag und Bekanntmachung des Hinweises auf die Patenterteilung: **18.06.2014**
(21) Anmeldenummer: 09008737.0
(22) Anmeldetag: 03.07.2009
(51) Int. Cl.: H04L 29/12, H04L 29/08, H04M 3/493

(54) **Verfahren zur Umwandlung einer ersten Identifikationsinformation in eine zweite Identifikationsinformation, Schnittstellenanordnung für ein Kommunikationsnetzwerk und Kommunikationsnetzwerk mit einer Umwandlungsinstanz**
Method for converting initial identification information to a second identification format, interface assembly for a communication network and communication network with a conversion instance
Procédé de conversion d'une première information d'identification en une seconde information d'identification, agencement d'interface pour un réseau de communication et réseau de communication doté d'une instance de conversion

(43) Veröffentlichungstag der Anmeldung: 12.01.2011
(73) Patentinhaber: Deutsche Telekom AG, 53113 Bonn (DE)
(72) Erfinder: Mildner, Frank, 64331 Weiterstadt (DE); Fleischhauer, Karsten, 64297 Darmstadt (DE); Franze, Elke, 64380 Roßdorf (DE)
(74) Vertreter: Schwöbel, Thilo K.

(56) Entgegenhaltungen:
- EP-A- 0 823 809
- WO-A-2004/047399
- US-A1- 2006 161 512

## Beschreibung

Die vorliegende Erfindung betrifft ein Verfahren zur Umwandlung einer ersten Identifikationsinformation einer ersten Identifikationsart in eine zweite Identifikationsinformation einer zweiten Identifikationsart, eine zur Ausführung des Verfahrens geeignete Schnittstellenanordnung und ein Kommunikationsnetzwerk mit einer Umwandlungsinstanz.

Identifikationsinformationen - im Folgenden auch als Identifier bezeichnet - wie Namen oder Adressen sind wichtige Ressourcen für die Kommunikation. Identifier dienen zur Repräsentation der Identität von an der Kommunikation beteiligten Netzkomponenten. Unter "Identifier" bzw. "Identifikationsinformation" wird im Folgenden eine Abfolge von Zahlen, Buchstaben oder anderen Zeichen / Symbolen verstanden, die zur eindeutigen Identifikation eines Teilnehmers, eines Benutzers, eines Netzwerkelements oder einer Funktion eines Netzwerkelements genutzt wird. Namen, Nummern und Adressen sind Identifikationsinformationen. Menschen bevorzugen als Identifikationsinformationen Namen und einfach zu merkende Nummern (z.B. Domain-Namen und Telefonnummern); Netzkomponenten bzw. Netzelemente verwenden meist Adressen (z.B. IP-Adressen, Internet Protokoll Adressen) zur Identifikation von an der Kommunikation Beteiligten. Zur Realisierung von Kommunikationsdiensten ist es notwendig, diese verwendeten verschiedenen Arten von Identifikationsinformationen - im Folgenden auch als Identifikationsarten bezeichnet - eindeutig einander zuzuordnen und aufeinander abzubilden (Identifier mapping). Diese Abbildung erfolgt gemäß bekannter Verfahren in sogenannten "Resolution Entities", die im Folgenden auch als Auflösungseinheiten bezeichnet werden. Unter "Mapping" bzw. "Umwandlung" wird im Folgenden grundsätzlich die hinsichtlich des Kontexts sinnvolle Auflösung eines Strings (d.h. einer Abfolge von Zeichen) in ein für den Anfragenden nutzbares Resultat. Ein Beispiel für eine Auflösungseinheit ist der DNS (Domain Name Service), mittels dem Domainnamen auf IP-Adressen abgebildet werden. Allgemein erfolgt derzeit die Abbildung von einem Identifier einer ersten Identifikationsart auf einen Identifier einer zweiten Identifikationsart innerhalb spezifischer Auflösungseinheiten, die jeweils für eine spezielle Zuordnung bzw. Abbildung (für ein vorgegebenes Paar einer ersten Identifikationsart aus einer Gruppe von Ausgangsidentifikationsarten und einer zweiten Identifikationsart aus einer Gruppe von Zielidentifikationsarten). Solche Auflösungseinheiten werden jeweils durch ein spezielles Protokoll angesprochen, wie beispielsweise das DNS-Protokoll, DIAMETER (RFC 3588), INAP (Intelligent Network Application Part), etc. Mit der Entwicklung der Telekommunikation haben sich eine Vielzahl von Identifikationsarten (auch als Identifiertypen bezeichnet) und ein Vielzahl von Verfahren und Protokollen zur Zuordnung und Abbildung einer ersten Identifikationsinformation einer ersten Identifikationsart in eine zweite Identifikationsinformation einer zweiten Identifikationsart entwickelt. Weiterhin möchten eine zunehmende Zahl von Benutzern von Kommunikationsdiensten mehrere einem einzelnen Benutzer zugeordnete Identitäten verwenden, je nach dem, welche Rolle in der konkreten Kommunikationssituation (z.B. privat, geschäftlich, soziales Netzwerk, etc.) eingenommen wird. Dies führt zu einer Zunahme der Identifier bzw. ihrer Beziehungen untereinander und damit auch zu einer Erhöhung der Komplexität, der Kosten und der Fehlermöglichkeiten bei der Erbringung von Kommunikationsdiensten. Es ist daher erforderlich, bei der Umwandlung von Identifikationsinformationen verschiedener Identifikationsarten verbesserte Lösungen bereitzustellen.

Aus den Druckschriften US 2006/0161512 A1 und EP 0 823 809 A2 sind ein universeller Auskunftsdienst bzw. ein Verfahren, ein System und ein Computerprogramm zur Unterstützung eines Datenbankzugriffs bekannt.

Bedingt durch die Vielzahl von verschiedenen Identifikationsarten, die Vielzahl von Identifikationsinformationen (durch die Vervielfachung durch mehrfache Identitäten) und die Vielzahl der an einer Kommunikationsdiensterbringung beteiligten Netzelemente (die sich ggf. wiederum unterschiedlicher Identifikationsarten bedienen), benötigt eine Diensteplattform in einem Netzwerk zur Erbringung von Kommunikationsdiensten eine Vielzahl verschiedener Auflösungseinheiten sowie Auflösungsprotokollen zu deren Koordination. Die Verweise zur Durchführung von komplizierteren Umwandlungen von Identifikationsinformationen mit sogenannter rekursiver Umwandlung, etwa zunächst von einer ersten Identifikationsart in eine zweite Identifikationsart und anschließend von der zweiten Identifikationsart in eine dritte Identifikationsart, müssen in dezentraler Weise in den Auflösungseinheiten oder in den Diensteplattformen, wie zum Beispiel IMS (IP Multimedia Subsystem) administriert werden. Dies führt zu einer hohen Komplexität in der Netzplattform, da hier eine Vielzahl von Auflösungseinheiten und deren spezifisches Protokoll implementiert werden müssen. Für Kommunikationsdienste benötigen solche Anwendungen bzw. Nutzinstanzen einen Zugriff auf diese Protokolle, müssen über eine eigene Logik zur Steuerung verfügen und müssen gegebenenfalls mehrfach innerhalb eines Kommunikationsvorgangs Zugriff auf diese Protokolle haben, um die für die Diensterbringung notwendige Umwandlung von Identifikationsinformationen durchführen zu können. Dies führt zu einem hohen Implementierungs- und Konfigurationsaufwand in den Anwendungen bzw. Nutzinstanzen und zu einer Vielzahl von Protokollen in der Kommunikationsplattform. Gleichzeitig führt dies durch den mehrfachen Zugriff auf die Auflösungseinheiten sowie einen zusätzlichen Authentifizierungsaufwand bei der Abfrage durch die Nutzinstanzen zu einer hohen Last sowohl in den Auflösungseinheiten als auch in den Nutzinstanzen.

Der Erfindung liegt die Aufgabe zugrunde, ein Verfahren zur Umwandlung einer ersten Identifikationsinformation einer ersten Identifikationsart in eine zweite Identifikationsinformation einer zweiten Identifikationsart, eine Schnittstellenanordnung für ein Kommunikationsnetzwerk zur Umwandlung einer ersten Identifikationsinformation einer ersten Identifikationsart in eine zweite Identifikationsinformation einer zweiten Identifikationsart und ein Kommunikationsnetzwerk mit einer Umwandlungsinstanz zur Umwandlung einer ersten Identifikationsinformation einer ersten Identifikationsart in eine zweite Identifikationsinformation einer zweiten Identifikationsart bereitzustellen, die die Nachteile des Standes der Technik vermeidet oder zumindest reduziert und zu einer einfacheren, kostengünstigeren sowie weniger fehleranfälligen Netzkonfiguration führt, um Kommunikationsdienste einfacher, flexibler, mit größerem Kundennutzen, kostengünster und mit größerer Dienstqualität erbringen zu können.

Diese Aufgabe wird gelöst durch ein Verfahren zur Umwandlung einer ersten Identifikationsinformation einer ersten Identifikationsart in eine zweite Identifikationsinformation einer zweiten Identifikationsart gemäß Anspruch 1, sowie einer Schnittstellenanordnung gemäß Anspruch 6 und einem Kommunikationsnetzwerk gemäß Anspruch 10.

Es ist hierdurch erfindungsgemäß in vorteilhafter Weise möglich, die Komplexität, die Fehleranfälligkeit und den Administrationsaufwand bei der Umwandlung von Identifikationsinformationen zwischen verschiedenen Identifikationsarten zu reduzieren, indem insbesondere die Anzahl der Auflösungseinheiten reduziert wird, die Anzahl der zu unterstützenden Auflösungsprotokolle in den Applikationen bzw. Nutzinstanzen bzw. Netzelementen reduziert wird, den Implementierungs- und Konfigurationsaufwand reduziert wird, die Anzahl der anfragenden Applikationen bzw. Nutzinstanzen an den Auflösungseinheiten reduziert wird, die Konvergenz verschiedener Netze zum NGN (Next Generation Network), wie Festnetz und Mobilfunknetz, (FMC, Fixed Mobile Convergence) befördert wird, die Integration von Kommunikationsdiensten und damit die Flexibilität hinsichtlich der Ausgestaltung von Kommunikationsdiensten erhöht wird, eine End-user zentrierte Diensteerbringung befördert wird und die bessere und schnellere Fehlerbehebung integrierter Kommunikationsdienste ermöglicht wird, was insbesondere mit Blick auf die Entwicklung des NGN (Next Generation Network) von großer Bedeutung ist. Durch die Schaffung einer Umwandlungsinstanz als sogenannter IDAL (IDentification Abstraction Layer)-Ebene zwischen den Nutzungsinstanzen einerseits und einer Vielzahl von Auflösungseinheiten ist es erfindungsgemäß vorteilhaft möglich, dass die Umwandlung zwischen verschiedenen Identifikationsarten stark vereinfacht wird. Die IDAL-Ebene bzw. die Umwandlungsinstanz dient erfindungsgemäß als universelle Auflösungseinheit für alle verschiedenen Typen von Identitätsinformationen (bzw. für alle verschiedenen Paare von Identifikationsarten aus den Ausgangsidentifikationsarten einerseits und den Zielidentifikationsarten andererseits). Die IDAL-Ebene wird als Schnittstelle gemäß einem einheitlichen Standardprotokoll seitens der Nutzungsinstanzen angesprochen (Client-Server-Architektur), wobei die Nutzungsinstanzen über eine Anfrageschnittstelle der IDAL-Ebene (die Client-Seite) verfügen und wobei die Umwandlungsinstanz der IDAL-Ebene eine Steuerungslogik bzw. Steuerungsschicht zur Bearbeitung der Umwandlungsanfragen der Anfrageschnittstellen (IDAL-Clients) der Nutzinstanzen aufweist. Die Umwandlungsinstanz weist bevorzugt mehrere Umwandlungsschnittstellen auf, wobei jeder Umwandlungsschnittstelle eine Auflösungseinheit zugeordnet ist und wobei die Steuerungsschicht verschiedene Umwandlungsfunktionen - ausgelöst durch die von der Nutzungsinstanz empfangene Umwandlungsanfrage - durchführt. Es ist damit erfindungsgemäß in vorteilhafter Weise möglich, vorhandene Auflösungseinheiten weiterhin zu verwenden. Erfindungsgemäß ist es besonders vorteilhaft, dass die IDAL-Ebene hinsichtlich der Umwandlungsfunktionen voll konfigurierbar ist und damit sehr flexibel ist. Erfindungsgemäß ist es ferner besonders bevorzugt, dass zwischen der Umwandlungsinstanz und den Nutzungsinstanzen eine Authentifizierung bzw. eine Authorisierung durchgeführt wird und eine Berechtigungsprüfung erfolgt. Hierzu weist die Steuerungsschicht eine Authentifizierungsschicht auf. Besonders vorteilhaft ist es erfindungsgemäß, dass mittels einer einzigen Umwandlungsanfrage der Nutzungsinstanz durch die Umwandlungsinstanz jede beliebige mögliche Umwandlung einer ersten Identifikationsinformation (aus der Gruppe der Ausgangsidentifikationsarten) in eine zweite Identifikationsinformation (aus der Gruppe der Zielidentifikationsarten) durchgeführt wird und der Nutzungsinstanz in Form der Umwandlungsantwort zurückgemeldet wird. Mit den hierbei gegebenenfalls erforderlichen mehrfachen Umwandlungen zwischen verschiedenen Identifikationsarten sowie deren Steuerung wird die Nutzungsinstanz nicht belastet. Die Nutzung einer einzigen Umwandlungsinstanz zur Umwandlung (d.h. für das Identifier Mapping) über eine generische Schnittstelle mit einheitlichem Standardprotokoll durch alle Nutzungsinstanzen vereinfacht die Nutzungsinstanzen und damit die Diensteerbringung im Netz erheblich. Durch die Verlagerung der Steuerungsschicht, d.h. der Intelligenz zur Durchführung der Umwandlung von Identifikationsinformationen, in die Umwandlungsinstanz (IDAL-Ebene) werden die Nutzinstanzen selbst entlastet und damit effizienter. Ferner müssen in den Auflösungseinheiten keine Regeln zu weiteren Auflösungsinstanzen (Rekursionsregeln) mehr gepflegt werden. Solche Regeln werden in einer das Ansprechen der Umwandlungsschnittstellen in Abhängigkeit des Inhalts der Umwandlungsanfrage steuernden Logikschicht der Steuerungsschicht definiert. Jede Nutzungsinstanz benötigt nur noch Zugriff auf die Umwandlungsinstanz, um die erforderlichen Umwandlungen durchzuführen. Dadurch ist es erfindungsgemäße auch möglich, dass sich die Sicherheit bezüglich der Authentizität und Integrität der übermittelten Daten erhöht und dass sich durch die Modularisierung der Funktionen die Skalierbarkeit des Gesamtsystems verbessert. Insbesondere ist es durch die Ermöglichung der Durchführung komplexer Umwandlungsvorgänge durch einfache und standardisierte Umwandlungsanfragen erfindungsgemäß vorteilhaft möglich, dass die Erbringung von integrierten Kommunikationsdiensten auf Netzen mit heterogener Protokollstruktur, wie beispielsweise Mobilfunknetzen, SIP-Netzen (Session Initiation Protocol), POTS-Netzen (Plain Old Telephone Service), SS7-Netzen (Signaling System #7), in einfacher Weise realisierbar ist.

Weitere bevorzugte Ausgestaltungen der Erfindung sind in den Unteransprüchen aufgeführt.

Besonders bevorzugt ist es erfindungsgemäß, dass die Umwandlungsanfrage und/oder die Umwandlungsantwort gemäß dem SOAP-Protokoll (Simple Object Activation Protocol) vorgesehen ist bzw. gemäß dem XML-Standard (Extended Markup Language) vorgesehen ist. Es ist hierdurch in einfacher und effizienter Weise möglich, dass ein einheitliches Standardprotokoll für alle Umwandlungen von Identifikationsinformationen zwischen verschiedenen Identifikationsarten benutzt wird, so dass den einzelnen Nutzungsinstanzen für die Umwandlung von Identifikationsinformationen innerhalb der gesamten Diensteplattform eine einheitliche Schnittstelle zur Verfügung steht, die zentral gewartet und administriert werden kann, so dass zum einen Fehlerkorrekturen schneller und besser durchgeführt werden können und zum anderen neue Dienste schneller und in höherer Qualität implementiert werden können.

Weiterhin ist erfindungsgemäß vorgesehen, dass die Umwandlungsinstanz eine Steuerungsschicht aufweist, wobei die Steuerungsschicht eine Mehrzahl von Umwandlungsschnittstellen für unterschiedliche Identifikationsarten aufweist, wobei die Umwandlungsinstanz eine Mehrzahl von Auflösungseinheiten aufweist, wobei jeweils einer Umwandlungsschnittstelle eine Auflösungseinheit derart zugeordnet ist, dass der Auflösungseinheit von der Umwandlungsschnittstelle die erste Identifikationsinformation der ersten Identifikationsart zugeleitet wird sowie der Umwandlungsschnittstelle von der Auflösungseinheit die zweite Identifikationsinformation der zweiten Identifikationsart zugeleitet wird, wobei zwischen einander zugeordneten Umwandlungsschnittstellen und Auflösungseinheiten für unterschiedliche Paare von ersten und zweiten Identifikationsarten unterschiedliche Abfrageprotokolle vorgesehen sind, insbesondere gemäß dem DNS-Standard (Domain Name System) und/oder gemäß dem RADIUS-Standard (Remote Authentication Dial-In User Service) und/oder gemäß dem DIAMETER-Standard (RFC 3588) und/oder gemäß dem SIP-Standard (Session Initiation Protocol). Hierdurch ist es mit dem erfindungsgemäßen Verfahren, der erfindungsgemäßen Schnittstellenanordnung und dem erfindungsgemäßen Kommunikationsnetzwerk erfindungsgemäß in vorteilhafter Weise möglich, dass bereits bestehende Methoden zur Umwandlung von Identifikationsinformationen bestehen bleiben können bzw. mit der Umwandlungsinstanz weiter genutzt werden können

Besonders bevorzugt ist erfindungsgemäß weiterhin auch, dass zwischen einer Mehrzahl von Umwandlungsschnittstellen und einer Mehrzahl von Auflösungseinheiten Identifikationsinformationen und durch die Steuerschicht gesteuert eine Umwandlung zwischen wenigstens drei verschiedenen Identifikationsarten zur Durchführung der Umwandlung der ersten Identifikationsinformation der ersten Identifikationsart aus der Gruppe der Ausgangsidentifikationsarten in die zweite Identifikationsinformation der zweiten Identifikationsart aus der Gruppe von Zielidentifikationsarten durchgeführt wird. Hierdurch ist es mit dem erfindungsgemäßen Verfahren, der erfindungsgemäßen Schnittstellenanordnung und dem erfindungsgemäßen Kommunikationsnetzwerk erfindungsgemäß in vorteilhafter Weise möglich, dass komplexe Umwandlungssteuerungen von Identifikationsinformationen von der Nutzungsinstanz getrennt in einfacher Weise durchgeführt werden können.

Besonders bevorzugt ist es erfindungsgemäß, dass unterschiedlichen Auflösungseinheiten unterschiedliche Typen von Datenbanken zugeordnet sind, wobei die Abfrageprotokolle in Abhängigkeit des Datenbanktyps der zugeordneten Datenbank unterschiedlich sind. Erfindungsgemäß ist es damit vorteilhaft möglich, dass bereits bestehende Strukturen zur Durchführung bestimmter Umwandlungen von Identifikationsinformationen weiter genutzt werden können.

Ein weiterer Gegenstand der vorliegenden Erfindung betrifft eine Schnittstellenanordnung für ein Kommunikationsnetzwerk zur Umwandlung einer ersten Identifikationsinformation einer ersten Identifikationsart in eine zweite Identifikationsinformation einer zweiten Identifikationsart, wobei die erste Identifikationsart aus einer Gruppe von Ausgangsidentifikationsarten ausgewählt ist und wobei die zweite Identifikationsart aus einer Gruppe von Zielidentifikationsarten ausgewählt ist, wobei die Schnittstellenanordnung zum Empfang einer Umwandlungsanfrage zur Aussendung einer Umwandlungsantwort ausgebildet ist, wobei die Umwandlungsanfragen und/oder die Umwandlungsantworten für eine beliebiges Paar der ersten Identifikationsart aus der Gruppe der Ausgangsidentifikationsarten und der zweiten Identifikationsart aus der Gruppe der Zielidentifikationsarten gemäß einem einheitlichen Standardprotokoll vorgesehen ist.

Weiterhin ist erfindungsgemäß bevorzugt, dass die Schnittstellenanordnung eine Umwandlungsinstanz aufweist, wobei die Umwandlungsinstanz eine Steuerungsschicht aufweist, wobei die Steuerungsschicht eine Mehrzahl von Umwandlungsschnittstellen für unterschiedliche Identifikationsarten aufweist, wobei der Umwandlungsinstanz eine Mehrzahl von Auflösungseinheiten zugeordnet sind, wobei jeweils einer Umwandlungsschnittstelle eine Auflösungseinheit derart zugeordnet ist, dass der Auflösungseinheit von der Umwandlungsschnittstelle die erste Identifikationsinformation der ersten Identifikationsart zuleitbar ist sowie der Umwandlungsschnittstelle von der Auflösungseinheit die zweite Identifikationsinformation der zweiten Identifikationsart zuleitbar ist, wobei zwischen einander zugeordneten Umwandlungsschnittstellen und Auflösungseinheiten für unterschiedliche Paare von ersten und zweiten Identifikationsarten unterschiedliche Abfrageprotokolle vorgesehen sind, zum Beispiel gemäß dem DNS-Standard (Domain Name System) und/oder gemäß dem RADIUS-Standard (Remote Authentication Dial-In User Service) und/oder gemäß dem DIAMETER-Standard (RFC 3588) und/oder gemäß dem SIP-Standard (Session Initiation Protocol).

Ein weiterer Gegenstand der vorliegenden Erfindung betrifft ein Kommunikationsnetzwerk mit einer Umwandlungsinstanz zur Umwandlung einer ersten Identifikationsinformation einer ersten Identifikationsart in eine zweite Identifikationsinformation einer zweiten Identifikationsart, wobei die erste Identifikationsart aus einer Gruppe von Ausgangsidentifikationsarten ausgewählt ist und wobei die zweite Identifikationsart aus einer Gruppe von Zielidentifikationsarten ausgewählt ist, wobei zur Durchführung der Umwandlung der Umwandlungsinstanz durch eine Nutzungsinstanz eine Umwandlungsanfrage zuleitbar ist und der Nutzungsinstanz durch die Umwandlungsinstanz eine Umwandlungsantwort zuleitbar ist, wobei die Umwandlungsanfragen und/oder die Umwandlungsantworten für eine beliebiges Paar der ersten Identifikationsart aus der Gruppe der Ausgangsidentifikationsarten und der zweiten Identifikationsart aus der Gruppe der Zielidentifikationsarten gemäß einem einheitlichen Standardprotokoll vorgesehen ist.

Besonders bevorzugt ist erfindungsgemäß weiterhin auch, dass die Umwandlungsinstanz eine Steuerungsschicht aufweist, wobei die Steuerungsschicht eine Mehrzahl von Umwandlungsschnittstellen für unterschiedliche Identifikationsarten aufweist, wobei die Umwandlungsinstanz eine Mehrzahl von Auflösungseinheiten aufweist, wobei jeweils einer Umwandlungsschnittstelle eine Auflösungseinheit derart zugeordnet ist, dass der Auflösungseinheit von der Umwandlungsschnittstelle die erste Identifikationsinformation der ersten Identifikationsart zuleitbar ist sowie der Umwandlungsschnittstelle von der Auflösungseinheit die zweite Identifikationsinformation der zweiten Identifikationsart zuleitbar ist, wobei zwischen einander zugeordneten Umwandlungsschnittstellen und Auflösungseinheiten für unterschiedliche Paare von ersten und zweiten Identifikationsarten unterschiedliche Abfrageprotokolle vorgesehen sind, zum Beispiel gemäß dem DNS-Standard (Domain Name System) und/oder gemäß dem RADIUS-Standard (Remote Authentication Dial-In User Service) und/oder gemäß dem DIAMETER-Standard (RFC 3588) und/oder gemäß dem SIP-Standard (Session Initiation Protocol).

Ausführungsbeispiele der Erfindung sind in der Zeichnung dargestellt und in der nachfolgenden Beschreibung näher erläutert. Die Figuren schränken den allgemeinen Erfindungsgedanken nicht ein.
Figur 1 zeigt eine schematische Darstellung einer Nutzungsinstanz und einer Umwandlungsinstanz gemäß einer beispielshaften Ausführungsform zur Durchführung des erfindungsgemäßen Verfahrens bzw. als Teil des erfindungsgemäßen Kommunikationsnetzwerks.
Figur 2 zeigt eine schematische Darstellung einer Nutzungsinstanz und einer Umwandlungsinstanz gemäß einer beispielshaften weiteren Ausführungsform zur Durchführung des erfindungsgemäßen Verfahrens bzw. als Teil des erfindungsgemäßen Kommunikationsnetzwerks.
Figur 3 zeigt eine schematische Darstellung der herkömmlichen Kommunikation einer Nutzungsinstanz zur Umwandlung von Identifikationsinformationen.
Figur 4 zeigt eine schematische Darstellung eines Kommunikationsnetzes mit zwei Teilnehmern.

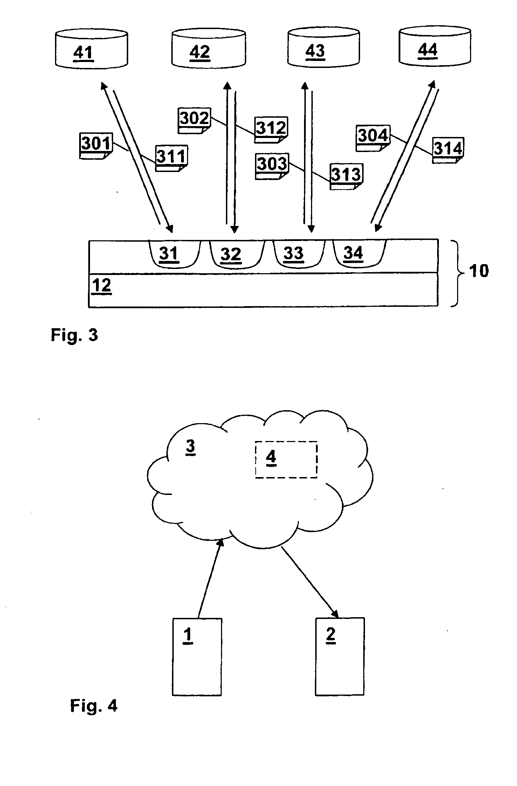

In Figur 4 ist eine schematische Darstellung eines Kommunikationsnetzes 3 mit zwei Teilnehmern 1, 2 dargestellt. Zur Erbringung eines Dienstes (beispielsweise die Verbindung des ersten Teilnehmers 1 mit dem zweiten Teilnehmer 2) muss eine Umwandlung einer Identitätsinformation durchgeführt werden. Hierfür weist das Kommunikationsnetz 3 eine Netzkomponente 4 auf, beispielsweise einen Rechner, mittels dem der angefragte Dienst erbracht wird. Hierzu wird im Kommunikationsnetz 3 eine Nutzungsinstanz 10 betrieben (beispielsweise die Herstellung einer Kommunikationsverbindung betreffend), die die Umwandlung einer Identitätsinformation benötigt.

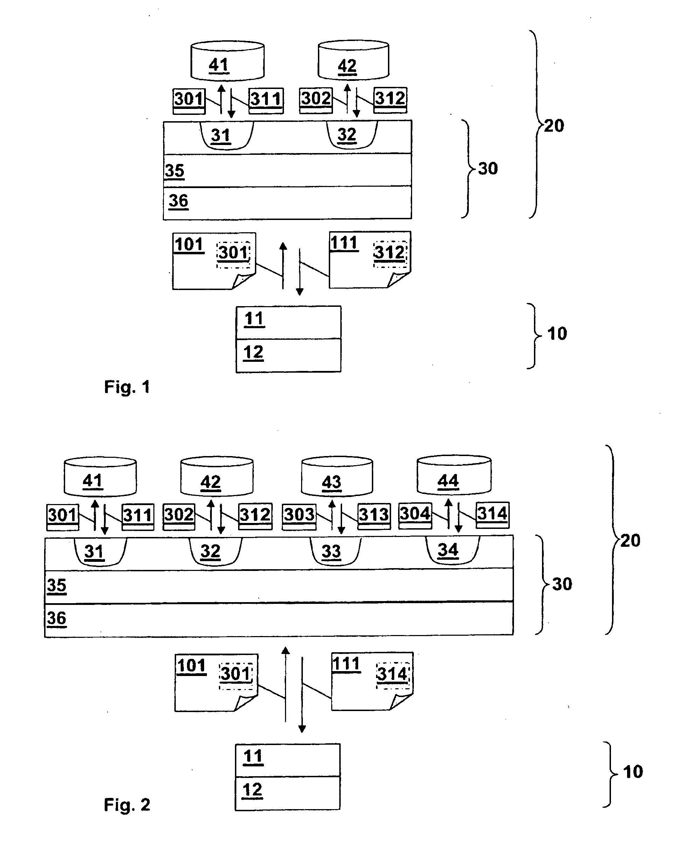

In den Figuren 1 und 2 ist schematisch ein Beispiel der Nutzungsinstanz 10 und einer Umwandlungsinstanz 20 gemäß einer beispielshaften Ausführungsform bzw. einer beispielhaften weiteren Ausführungsform zur Durchführung des erfindungsgemäßen Verfahrens bzw. als Teil des erfindungsgemäßen Kommunikationsnetzwerks 3 dargestellt. Die Figuren 1 und 2 werden im Folgenden gemeinsam beschrieben. Die Nutzungsinstanz 10 weist eine Anwendungsschicht 12 und eine Anfrageschnittstelle 11 auf. Die Umwandlungsinstanz 20 weist eine Steuerungsschicht 30 und eine Mehrzahl von Auflösungseinheiten 41, 42, 43, 44 auf. Die Steuerungsschicht 30 weist eine Authentifizierungsschicht 36, eine Logikschicht 35 und weiterhin eine Mehrzahl von Umwandlungsschnittstellen 31, 32, 33, 34 auf. Die Auflösungseinheiten 41, 42, 43, 44 können entweder (ggf. mit zugehörigen Datenbanken) physisch mit der Steuerungsschicht 30 "verbunden" sein bzw. gemeinsam lokalisiert sein (beispielsweise in dem Sinn, dass sich diese auf einem Rechner ("Server") "befinden", d.h. von ein und demselben Rechner ausgeführt werden) oder aber es sind die Auflösungseinheiten 41, 42, 43, 44 der Steuerschicht 30 lediglich zugeordnet, d.h. die Auflösungseinheiten 41, 42, 43, 44 sind räumlich von der Steuerschicht 30 getrennt und kommunizieren über eine Kommunikationsverbindung (beispielsweise als Teil des Kommunikationsnetzes 3 oder aber über eine dezidierte (separate) Kommunikationsverbindung. Jeder Umwandlungsschnittstelle 31, 32, 33, 34 ist in der Regel genau eine Auflösungseinheit 41, 42, 43, 44 zugeordnet. Selbstverständlich können jedoch mehrere Paarungen von logischer Umwandlungsschnittstelle und logischer Auflösungseinheit zusammengefasst sein. Eine solche Paarung von logischer Umwandlungsschnittstelle und logischer Auflösungseinheit dient zur Umwandlung von ersten Identifikationsinformationen 301, 302, 303, 304 von genau einer ersten Identifikationsart (aus einer Gruppe von Ausgangsidentifikationsarten) in zweite Identifikationsinformationen 311, 312, 313, 314 von genau einer zweiten Identifikationsart (aus einer Gruppe von Zielidentifikationsarten) gemäß eines spezifischen Schnittstellenprotokolls. Einer anderen Paarung von logischer Umwandlungsschnittstelle und logischer Auflösungseinheit würde es entsprechen, wenn entweder sich eine der Identifikationsarten oder aber das Schnittstellenprotokoll unterscheiden würde.

Die Logikschicht 35 dient der Ansteuerung der Umwandlungsschnittstellen 31, 32, 33, 34 derart, dass die mittels der Umwandlungsanfrage 101 angefragten (und den (mit der Umwandlungsanfrage 101 übermittelten) ersten Identifikationsinformationen 301, 302, 303, 304 entsprechenden) zweiten Identifikationsinformationen 311, 312, 313, 314 von einer Auflösungseinheit 41, 42, 43, 44 oder aber von einer Mehrzahl von Auflösungseinheiten 41, 42, 43, 44 geliefert werden, so dass die zweiten Identifikationsinformationen 311, 312, 313, 314 dann mittels der Umwandlungsantwort 111 an die (Anfrageschnittstelle 11 der) Nutzungsinstanz 10 geleitet werden kann. Bevor die Logikschicht 35 die Umwandlungsantwort 111 an die Nutzungsinstanz 10 leitet, wird mittels eines durch die Authentifizierungsschicht 36 gesteuerten Authentifizierungsvorgangs sichergestellt, dass die Nutzungsinstanz 10 (bzw. deren Anfrageschnittstelle 11) berechtigt ist, die zweiten Identifikationsinformationen 311, 312, 313, 314 abzufragen.

Gemäß dem in Figur 1 abgebildeten Beispiel werden seitens der Nutzinstanz 10 (mittels der Umwandlungsanfrage 101) beispielsweise mit den mit dem Bezugszeichen 301 bezeichneten ersten Identifikationsinformationen die mit dem Bezugszeichen 312 bezeichneten zweiten Identifikationsinformationen angefragt und mittels der Umwandlungsantwort 111 an die Nutzinstanz 10 zurückgeliefert. In diesem Beispiel wird angenommen, dass die mit den Bezugszeichen 311 und 302 bezeichneten Identifikationsinformationen von der gleichen Identifikationsart sind und daher zum einen von der mit dem Bezugszeichen 41 bezeichneten Auflösungseinheit als Antwort (d.h. als zweite Identifikationsinformationen 311) an die mit dem Bezugszeichen 31 bezeichnete Umwandlungsschnittstelle zurückgeliefert werden und zum anderen von der mit dem Bezugszeichen 32 bezeichneten Umwandlungsschnittstelle als Anfrage (d.h. als erste Identifikationsinformationen 302) an die mit dem Bezugszeichen 42 bezeichnete Auflösungseinheit weitergeleitet werden.

Gemäß dem in Figur 2 abgebildeten Beispiel werden seitens der Nutzinstanz 10 mittels der Umwandlungsanfrage 101 beispielsweise mit den mit dem Bezugszeichen 301 bezeichneten ersten Identifikationsinformationen die mit dem Bezugszeichen 314 bezeichneten zweiten Identifikationsinformationen angefragt und mittels der Umwandlungsantwort 111 an die Nutzinstanz 10 zurückgeliefert. In diesem Beispiel wird angenommen, dass die mit den Bezugszeichen 311 und 302 bezeichneten Identifikationsinformationen von der gleichen Identifikationsart sind und daher zum einen von der mit dem Bezugszeichen 41 bezeichneten Auflösungseinheit als Antwort (d.h. als zweite Identifikationsinformationen 311) an die mit dem Bezugszeichen 31 bezeichnete Umwandlungsschnittstelle zurückgeliefert werden und zum anderen von der mit dem Bezugszeichen 32 bezeichneten Umwandlungsschnittstelle als Anfrage (d.h. als erste Identifikationsinformationen 302) an die mit dem Bezugszeichen 42 bezeichnete Auflösungseinheit weitergeleitet werden. Ferner wird in diesem Beispiel angenommen, dass die mit den Bezugszeichen 312 und 303 bezeichneten Identifikationsinformationen von der gleichen Identifikationsart sind und daher zum einen von der mit dem Bezugszeichen 42 bezeichneten Auflösungseinheit als Antwort (d.h. als zweite Identifikationsinformationen 312) an die mit dem Bezugszeichen 32 bezeichnete Umwandlungsschnittstelle zurückgeliefert werden und zum anderen von der mit dem Bezugszeichen 32 bezeichneten Umwandlungsschnittstelle als Anfrage (d.h. als erste Identifikationsinformationen 303) an die mit dem Bezugszeichen 43 bezeichnete Auflösungseinheit weitergeleitet werden. Ferner wird in diesem Beispiel angenommen, dass die mit den Bezugszeichen 313 und 304 bezeichneten Identifikationsinformationen von der gleichen Identifikationsart sind und daher zum einen von der mit dem Bezugszeichen 43 bezeichneten Auflösungseinheit als Antwort (d.h. als zweite Identifikationsinformationen 313) an die mit dem Bezugszeichen 33 bezeichnete Umwandlungsschnittstelle zurückgeliefert werden und zum anderen von der mit dem Bezugszeichen 34 bezeichneten Umwandlungsschnittstelle als Anfrage (d.h. als erste Identifikationsinformationen 303) an die mit dem Bezugszeichen 44 bezeichnete Auflösungseinheit weitergeleitet werden.

Gemäß dem in Figur 4 abgebildeten Stand der Technik muss die Nutzungsinstanz 10, d.h. jede beliebige Anwendung, die im Netzwerk einen Umwandlungsbedarf hat, (im Gegensatz zur erfindungsgemäßen Umwandlung unter Zuhilfenahme der Umwandlungsinstanz 20) die in Figur 4 abgebildeten Umwandlungsvorgänge zur Umwandlung der ersten Identifikationsinformation 301 in die zweite Identifikationsinformation 314 selbst steuern, d.h. ausgehend von der Erkenntnis, dass zur ersten Identifikationsinformation 301 (von der ersten Identifikationsart) eine Identifikationsinformation von der Identifikationsart der zweiten Identifikationsinformation 314 benötigt wird, die Durchführung sämtlicher Umwandlungsvorgänge (mit den entsprechenden Authentifizierungen) zur Überführung in die Identifikationsart der zweiten Identifikationsinformation 314 steuern und überwachen.

Demgegenüber wird beim Verfahren, bei der Schnittstellenanordnung und beim Kommunikationsnetzwerk gemäß der vorliegenden Erfindung die Nutzungsinstanz 10 von solchen Umwandlungsvorgängen entlastet. Das bedeutet, dass die Nutzungsinstanz 10 beim Erkennen eines Umwandlungsbedarfs, beispielsweise von der Telefonnummer (als erster Identifikationsart (d.h. bekannte Identifikationsart) und Teil der Gruppe der Ausgangsidentifikationsarten) des angerufenen Teilnehmers auf die sogenannte Next-Hop-Adresse (als zweiter Identifikationsart (d.h. gesuchte Identifikationsart) und Teil der Gruppe der Zielidentifikationsarten) des nächsten Netzelements, mittels der Anfrageschnittstelle 11 eine entsprechende Umwandlungsanfrage 101 an die Umwandlungsinstanz 20 sendet. Dies geschieht erfindungsgemäß mittels eines einheitlichen Standardprotokolls, insbesondere gemäß dem SOAP-Protokoll. Die Steuerungsschicht 30 der Umwandlungsinstanz 20, insbesondere die Logikschicht 35 steuert eine oder mehrere Umwandlungsschnittstellen 31, 32, 33, 34 seriell oder rekursiv (insbesondere mittels einer sogenannten Rule-Engine, d.h. ein Regelwerk, innerhalb der Logikschicht 35) derart an, dass (mittels der entsprechenden Antworten der Auflösungseinheiten 41, 42, 43, 44) diese Umwandlung erfolgreich durchgeführt werden kann und die gesuchte Next-Hop-Adresse (als zweite Identifikationsinformation) mittels der Umwandlungsantwort 111 (entsprechend dem Standardprotokoll, insbesondere SOAP) wieder an die Nutzungsinstanz 10 zurückgeleitet werden kann. Insbesondere ist die Umwandlungsantwort 111 die einzige Antwort auf die Umwandlungsanfrage 101. Bevor die Umwandlungsantwort 111 an die Anfrageschnittstelle 11 zurückgemeldet wird (d.h. entweder parallel zur Abarbeitung der Umwandlung oder aber auch bevor überhaupt die Abarbeitung der Umwandlung in der Umwandlungsinstanz 20 begonnen wird), wird die Nutzungsinstanz 10 authentisiert, d.h. es wird (durch die Authentifizierungsschicht 35 der Umwandlungsinstanz 20) geprüft, ob diese Nutzungsinstanz 10 bzw. Applikation 10 diese Anfrage stellen darf.

Erfindungsgemäß wird durch die Umwandlungsinstanz 20 ein Server realisiert, bezüglich dessen die Anfrageschnittstelle 11 (bzw. die Nutzungsinstanz 10) als Nutzer (bzw. Client) fungiert. Hierdurch wird zwischen der Nutzinstanz 10 und der Umwandlungsinstanz 20 die erfindungsgemäße Schnittstellenanordnung realisiert. Charakteristisch für diese Schnittstellenanordnung ist, dass für sämtliche Umwandlungsvorgänge zwischen Ausgangsidentifikationsarten einerseits und Zielidentifikationsarten andererseits eine einheitliche Standardschnittstelle, insbesondere gemäß dem SOAP-Protokoll, Verwendung findet.

Ein weiteres Beispiel soll die Vorgehensweise gemäß der vorliegenden Erfindung verdeutlichen. In diesem Beispiel soll das erfindungsgemäße Verfahren (bzw. die erfindungsgemäße Schnittstellenanordnung bzw. das erfindungsgemäße Kommunikationsnetzwerk) zur Realisierung eines integrierten Kommunikationsdienstes (als Nutzungsinstanz 10) "Mobilfunk und IP TV (Internet Protocol TeleVision)" zur Freischaltung eines IP-TV-Leistungsmerkmals über ein Mobilfunkendgerät veranschaulicht werden. Hierbei benötigt die Nutzungsinstanz 10 (die iP-TV Anwendung) basierend auf der Mobilfunknummer, beispielsweise GSM-Mobilfunknummer, die aktuelle IP-Adresse des Breitbandanschlusses der sogenannten IAD (Integrated Access Device) des IP-TV-Anschlusses, um einen Berechtigungsnachweis (sog. credential) an die IP-Adresse (Internet-Protocol-Adresse) des IAD zur Freischaltung eines IP-TV-Leistungsmerkmals - etwa eines Films oder dergleichen - senden zu können. Gemäß der vorliegenden Erfindung sendet die Nutzungsinstanz 10, d.h. in diesem Fall die IP-TV-Anwendung, über die Anfrageschnittstelle 11 und gemäß dem SOAP-Protokoll die Umwandlungsanfrage 101 an die Umwandlungsinstanz 20. Die Umwandlungsanfrage 101 umfasst hierbei sowohl die bekannte Mobilfunknummer (MSISDN, Mobile Subscriber Integrated Services Digital Network Number) als erste Identifikationsinformation 301 als auch die nachgefragte IP-Adresse der IP-TV-IAD als zweite Identifikationsart. Die Umwandlungsinstanz 20 bzw, die Steuerungsschicht 30, insbesondere die Authentifizierungsschicht 36, identifiziert die Nutzungsinstanz 10 - hier die IP-TV-Anwendung - und authentifiziert bzw. autorisiert die Umwandlungsanfrage. Ferner wird durch die Steuerungsschicht 30, insbesondere die Logikschicht 35, eine hinterlegte Regel für die Umwandlung (Mappingfunktion) der Identifikationsart "MSISDN" auf die Identifikationsart "IP-Adresse des IP-TV-IAD" aufgerufen. Zur Abarbeitung dieser Regel für die Umwandlung werden die Umwandlungsschnittstellen 31, 32, 33, 34 aufgerufen, die ihrerseits die Auflösungseinheiten 41, 42, 43, 44 zur Abgabe entsprechender Antworten anfragen. Im vorliegenden Fall wird gemäß der in der Steuerungsschicht 30 hinterlegten Regel für die Umwandlung beispielsweise über ein DB2-Protokoll mittels der Identifikationsart "MSISDN" die Kundendatenbank nach der Identifikationsart "Kundennummer" als Antwort angefragt. Anschließend wird mittels beispielsweise einem SQL-Protokoll mittels der Identifikationsart "Kundennummer" die Vertragsdatenbank nach der Identifikationsart "Line ID" als Antwort abgefragt. Ferner wird mittels beispielsweise eines DIAMETER-Protokolls mit der Identifikationsart "Line-ID" nach der Identifikationsart "Session ID" als Antwort abgefragt. Ferner wird mittels beispielsweise eines RADIUS-Protokolls mit der Identifikationsart "Session-ID" nach der Identifikationsart "IP-Adresse des IP-TV-IAD" als Antwort abgefragt. Die Umwandlungsinstanz 20 sendet anschließend die diesbezügliche Identifikationsinformation 311, 312, 313, 314 an die Nutzungsinstanz 10, d.h. die IP-TV-Anwendung.

## Patentansprüche

1. Verfahren zur Umwandlung einer ersten Identifikationsinformation (301, 302, 303, 304) einer ersten Identifikationsart in eine zweite Identifikationsinformation (311, 312, 313, 314) einer zweiten Identifikationsart, wobei die erste Identifikationsart aus einer Gruppe von Ausgangsidentifikationsarten ausgewählt ist und wobei die zweite Identifikationsart aus einer Gruppe von Zielidentifikationsarten ausgewählt ist, wobei zur Durchführung der Umwandlung eine Umwandlungsanfrage (101) durch eine Nutzungsinstanz (10) einer Umwandlungsinstanz (20) zugeleitet wird und der Nutzungsinstanz (10) durch die Umwandlungsinstanz (20) eine Umwandlungsantwort (111) zugeleitet wird, **dadurch gekennzeichnet, dass** die Umwandlungsanfragen (101) und/oder die Umwandlungsantworten (111) für ein beliebiges Paar der ersten Identifikationsart aus der Gruppe der Ausgangsidentifikationsarten und der zweiten Identifikationsart aus der Gruppe der Zielidentifikationsarten gemäß einem einheitlichen Standardprotokoll vorgesehen ist, wobei die Umwandlungsinstanz (20) eine Steuerungsschicht (30) aufweist, wobei die Steuerungsschicht (30) eine Mehrzahl von Umwandlungsschnittstellen (31, 32, 33, 34) für unterschiedliche Identifikationsarten aufweist, wobei die Umwandlungsinstanz (20) eine Mehrzahl von Auflösungseinheiten (41, 42, 43, 44) aufweist, wobei jeweils einer Umwandlungsschnittstelle (31, 32, 33, 34) eine Auflösungseinheit (41, 42, 43, 44) derart zugeordnet ist, dass der Auflösungseinheit (41, 42, 43, 44) von der Umwandlungsschnittstelle (31, 32, 33, 34) die erste Identifikationsinformation (301, 302, 303, 304) der ersten Identifikationsart zugeleitet wird sowie der Umwandlungsschnittstelle (31, 32, 33, 34) von der Auflösungseinheit (41, 42, 43, 44) die zweite Identifikationsinformation (311, 312, 313, 314) der zweiten Identifikationsart zugeleitet wird, wobei zwischen einander zugeordneten Umwandlungsschnittstellen (31, 32, 33, 34) und Auflösungseinheiten (41, 42, 43, 44) für unterschiedliche Paare von ersten und zweiten Identifikationsarten unterschiedliche Abfrageprotokolle vorgesehen sind.

2. Verfahren nach Anspruch 1, **dadurch gekennzeichnet, dass** die Umwandlungsanfrage (101) und/oder die Umwandlungsantwort (111) gemäß dem SOAP-Protokoll, Simple Object Activation Protocol, vorgesehen ist.

3. Verfahren nach einem der vorhergehenden Ansprüche, **dadurch gekennzeichnet, dass** die unterschiedlichen Abfrageprotokolle gemäß dem DNS-Standard, Domain Name System, und/oder gemäß dem RADIUS-Standard, Remote Authentication Dial-In User Service, und/oder gemäß dem DIAMETER-Standard, RFC 3588, und/oder gemäß dem SIP-Standard, Session Initiation Protocol, vorgesehen sind.

4. Verfahren nach einem der vorhergehenden Ansprüche, **dadurch gekennzeichnet, dass** zwischen einer Mehrzahl von Umwandlungsschnittstellen (31, 32, 33, 34) und einer Mehrzahl von Auflösungseinheiten (41, 42, 43, 44) Identifikationsinformationen und durch die Steuerschicht (30) gesteuert eine Umwandlung zwischen wenigstens drei verschiedenen Identifikationsarten zur Durchführung der Umwandlung der ersten Identifikationsinformation (301, 302, 303, 304) der ersten Identifikationsart aus der Gruppe der Ausgangsidentifikationsarten in die zweite Identifikationsinformation (311, 312, 313, 314) der zweiten Identifikationsart aus der Gruppe von Zielidentifikationsarten durchgeführt wird.

5. Verfahren nach einem der vorhergehenden Ansprüche, **dadurch gekennzeichnet, dass** unterschiedlichen Auflösungseinheiten (41, 42, 43, 44) unterschiedliche Typen von Datenbanken zugeordnet sind, wobei die Abfrageprotokolle in Abhängigkeit des Datenbanktyps der zugeordneten Datenbank unterschiedlich sind.

6. Schnittstellenanordnung für ein Kommunikationsnetzwerk (3) zur Umwandlung einer ersten Identifikationsinformation (301, 302, 303, 304) einer ersten Identifikationsart in eine zweite Identifikationsinformation (311, 312, 313, 314) einer zweiten Identifikationsart, wobei die erste Identifikationsart aus einer Gruppe von Ausgangsidentifikationsarten ausgewählt ist und wobei die zweite Identifikationsart aus einer Gruppe von Zielidentifikationsarten ausgewählt ist, wobei die Schnittstellenanordnung zum Empfang einer Umwandlungsanfrage (101) und zur Aussendung einer Umwandlungsantwort (111) ausgebildet ist, **dadurch gekennzeichnet, dass** die Umwandlungsanfragen (101) und/oder die Umwandlungsantworten (111) für ein beliebiges Paar der ersten Identifikationsart aus der Gruppe der Ausgangsidentifikationsarten und der zweiten Identifikationsart aus der Gruppe der Zielidentifikationsarten gemäß einem einheitlichen Standardprotokoll vorgesehen sind, wobei der.Schnittstellenanordnung eine Umwandlungsinstanz (20) zugeordnet ist, wobei die Umwandlungsinstanz (20) eine Steuerungsschicht (30) aufweist, wobei die Steuerungsschicht (30) eine Mehrzahl von Umwandlungsschnittstellen (31, 32, 33, 34) für unterschiedliche Identifikationsarten aufweist, wobei die Umwandlungsinstanz (20) eine Mehrzahl von Auflösungseinheiten (41, 42, 43, 44) umfasst, wobei jeweils einer Umwandlungsschnittstelle (31, 32, 33, 34) eine Auflösungseinheit (41, 42, 43, 44) derart zugeordnet ist, dass die Umwandlungsschnittstelle (31, 32, 33, 34) ausgebildet ist, der Auflösungseinheit (41, 42, 43, 44) die erste Identifikationsinformation (301, 302, 303, 304) der ersten Identifikationsart zuzuleiten sowie die Auflösungseinheit (41, 42, 43, 44) ausgebildet ist, der Umwandlungsschnittstelle (31, 32, 33, 34) die zweite Identifikationsinformation (311, 312, 313, 314) der zweiten Identifikationsart zuzuleiten, wobei zwischen einander zugeordneten Umwandlungsschnittstellen (31, 32, 33, 34) und Auflösungseinheiten (41, 42, 43, 44) für unterschiedliche Paare von ersten und zweiten Identifikationsarten unterschiedliche Abfrageprotokolle vorgesehen sind.

7. Schnittstellenanordnung nach Anspruch 6, **dadurch gekennzeichnet, dass** die Umwandlungsanfrage (101) und/oder die Umwandlungsantwort (111) gemäß dem SOAP-Protokoll, Simple Object Activation Protocol, vorgesehen ist.

8. Schnittstellenanordnung nach Anspruch 6 oder 7, **dadurch gekennzeichnet, dass** die unterschiedlichen Abfrageprotokolle gemäß dem DNS-Standard, Domain Name System, und/oder gemäß dem RADIUS-Standard, Remote Authentication Dial-In User Service, und/oder gemäß dem DIAMETER-Standard, RFC 3588, und/oder gemäß dem SIP-Standard, Session Initiation Protocol, vorgesehen sind.

9. Schnittstellenanordnung nach einem der Ansprüche 6 bis 8, **dadurch gekennzeichnet, dass** unterschiedlichen Auflösungseinheiten (41, 42, 43, 44) unterschiedliche Typen von Datenbanken zugeordnet sind, wobei die Abfrageprotokolle in Abhängigkeit des Datenbanktyps der zugeordneten Datenbank unterschiedlich sind.

10. Kommunikationsnetzwerk (3) mit einer Umwandlungsinstanz (20) zur Umwandlung einer ersten Identifikationsinformation (301, 302, 303, 304) einer ersten Identifikationsart in eine zweite Identifikationsinformation (311, 312, 313, 314) einer zweiten Identifikationsart, wobei die erste Identifikationsart aus einer Gruppe von Ausgangsidentifikationsarten ausgewählt ist und wobei die zweite Identifikationsart aus einer Gruppe von Zielidentifikationsarten ausgewählt ist, wobei zur Durchführung der Umwandlung vorgesehen ist, der Umwandlungsinstanz (20) durch eine Nutzungsinstanz (10) eine Umwandlungsanfrage (101) zuzuleiten und der Nutzungsinstanz (10) durch die Umwandlungsinstanz (20) eine Umwandlungsantwort (111) zuzuleiten, **dadurch gekennzeichnet, dass** die Umwandlungsanfragen (101) und/oder die Umwandlungsantworten (111) für ein beliebiges Paar der ersten Identifikationsart aus der Gruppe der Ausgangsidentifikationsarten und der zweiten Identifikationsart aus der Gruppe der Zielidentifikationsarten gemäß einem einheitlichen Standardprotokoll vorgesehen ist, wobei die Umwandlungsinstanz (20) eine Steuerungsschicht (30) aufweist, wobei die Steuerungsschicht (30) eine Mehrzahl von Umwandlungsschnittstellen (31, 32, 33, 34) für unterschiedliche Identifikationsarten aufweist, wobei die Umwandlungsinstanz (20) eine Mehrzahl von Auflösungseinheiten (41, 42, 43, 44) umfasst, wobei jeweils einer Umwandlungsschnittstelle (31, 32, 33, 34) eine Auflösungseinheit (41, 42, 43, 44) derart zugeordnet ist, dass die Umwandlungsschnittstelle (31, 32, 33, 34) ausgebildet ist, der Auflösungseinheit (41, 42, 43, 44) die erste Identifikationsinformation (301, 302, 303, 304) der ersten Identifikationsart zuzuleiten sowie die Auflösungseinheit (41, 42, 43, 44) ausgebildet ist, der Umwandlungsschnittstelle (31, 32, 33, 34) die zweite Identifikationsinformation (311, 312, 313, 314) der zweiten Identifikationsart zuzuleiten, wobei zwischen einander zugeordneten Umwandlungsschnittstellen (31, 32, 33, 34) und Auflösungseinheiten (41, 42, 43, 44) für unterschiedliche Paare von ersten und zweiten Identifikationsarten unterschiedliche Abfrageprotokolle vorgesehen sind.

11. Kommunikationsnetzwerk (3) nach Anspruch 10, **dadurch gekennzeichnet, dass** die Umwandlungsanfrage (101) und/oder die Umwandlungsantwort (111) gemäß dem SOAP-Protokoll, Simple Object Activation Protocol, vorgesehen ist.

12. Kommunikationsnetzwerk (3) nach einem der Ansprüche 10 oder 11, **dadurch gekennzeichnet, dass** die unterschiedlichen Abfrageprotokolle gemäß dem DNS-Standard, Domain Name System, und/oder gemäß dem RADIUS-Standard, Remote Authentication Dial-In User Service, und/oder gemäß dem DIAMETER-Standard, RFC 3588, und/oder gemäß dem SIP-Standard, Session Initiation Protocol, vorgesehen sind.

13. Kommunikationsnetzwerk (3) nach einem der Ansprüche 10 bis 12, **dadurch gekennzeichnet, dass** unterschiedlichen Auflösungseinheiten (41, 42, 43, 44) unterschiedliche Typen von Datenbanken zugeordnet sind, wobei die Abfrageprotokolle in Abhängigkeit des Datenbanktyps der zugeordneten Datenbank unterschiedlich sind.

## Claims

1. Method for conversion of a first identification information (301, 302, 303, 304) of a first identification type to a second identification information (311, 312, 313, 314) of a second identification type, wherein the first identification type is selected from a group of output identification types and wherein the second identification type is selected from a group of target identification types, wherein, for execution of the conversion, a conversion request (101) is supplied by a usage entity (10) of a conversion entity (20) and a conversion response (111) is supplied to the usage entity (10) by the conversion entity (20), **characterised in that** the conversion requests (101) and/or the conversion responses (111) for any one pair of the first identification type is provided from the group of output identification types and the second identification type from the group of target identification types in accordance with a uniform standard protocol, wherein the conversion entity (20) has a control layer (30), wherein the control layer (30) has a plurality of conversion interfaces (31, 32, 33, 34) for different identification types, wherein the conversion entity (20) has a plurality of resolution entities (41, 42, 43, 44), wherein a resolution entity (41, 42, 43, 44) is allocated to each conversion interface (31, 32, 33, 34) such that the first identification information (301, 302, 303, 304) of the first identification type is supplied to the resolution entity (41, 42, 43, 44) by the conversion interface (31, 32, 33, 34) and the second identification information (311, 312, 313, 314) of the second information type is supplied to the conversion interface (31, 32, 33, 34) by the resolution entity (41, 42, 43, 44), wherein different request protocols are provided between conversion interfaces (31, 32, 33, 34) assigned between one another and resolution entities (41, 42, 43, 44) for different pairs of first and second identification types.

2. Method in accordance with claim 1, **characterised in that** the conversion request (101) and/or the conversion response (111) is provided in accordance with the SOAP protocol 'Simple Object Activation Protocol'.

3. Method in accordance with one of the preceding claims, **characterised in that** the different request protocols are provided according to the DNS standard, Domain Name System, and/or according to the RADIUS standard, Remote Authentication Dial-in User Service, and/or according to the DIAMETER standard, RFC 3588, and/or according to the SIP standard, Session Initiation Protocol.

4. Method in accordance with one of the preceding claims, **characterised in that** between a plurality of conversion interfaces (31, 32, 33, 34) and a plurality of resolution entities (41, 42, 43, 44) identification information and controlled by the control layer (30) a conversion is carried out between at least three identification types for carrying out the conversion of the first identification information (301, 302, 303, 304) of the first identification type from the group of output identification types to the second identification information (311, 312, 313, 314) of the second identification type from the group of target identification types.

5. Method in accordance with one of the preceding claims, **characterised in that** different resolution entities (41, 42, 43, 44) are associated with different types of databases, wherein the request protocols are different, depending on the database type of the associated database.

6. Interface arrangement for a communication network (3) for conversion of a first identification information (301, 302, 303, 304) of a first identification type to a second identification information (311, 312, 313, 314) of a second identification type, wherein the first identification type is selected from a group of output identification types and wherein the second identification type is selected from a group of target identification types, wherein the interface arrangement is configured to receive a conversion request (101) and to transmit a conversion response (111), **characterised in that** the conversion requests (101) and/or the conversion responses (111) for any one pair of the first identification type are provided from the group of output identification types and the second identification type from the group of target identification types according to a uniform standard protocol, wherein a conversion entity (20) is assigned to the interface arrangement, wherein the conversion entity (20) has a control layer (30), wherein the control layer (30) has a plurality of conversion interfaces (31, 32, 33, 34) for different identification types, wherein the conversion entity (20) comprises a plurality of resolution entities (41, 42, 43, 44), wherein a resolution entity (41, 42, 43, 44) is assigned to a respective conversion interface (31, 32, 33, 34), so that the conversion interface (31, 32, 33, 34) is configured to supply to the resolution entity (41, 42, 43, 44) the first identification information (301, 302, 303, 304) of the first identification type and the resolution entity (41, 42, 43, 44) is configured to supply the conversion interface (31, 32, 33, 34) the second identification information (311, 312, 313, 314) of the second identification type, wherein different request protocols are provided between conversion interfaces (31, 32, 33, 34) and resolution entities (41, 42, 43, 44) assigned between one other for different pairs of first and second identification types.

7. Interface arrangement in accordance with claim 6, **characterised in that** the conversion request (101) and/or conversion response (111) is provided in accordance with the SOAP protocol, Simple Object Activation Protocol.

8. Interface arrangement in accordance with claim 6 or 7, **characterised in that** the different request protocols are provided in accordance with the DNS standard, Domain Name System, and/or according to the RADIUS standard, Remote Authentication Dial-In User Service, and and/or according to the DIAMETER standard, RFC 3588, and/or according to the SIP standard, Session Initiation Protocol.

9. Interface arrangement in accordance with claims 6 to 8, **characterised in that** different types of databases are assigned to different resolution entities (41, 42, 43, 44), wherein the request protocols are different, depending on the database type of the associated database.

10. Communication network (3) with a conversion entity (20) for conversion of a first identification information (301, 302, 303, 304) of a first identification type to a second identification information (311, 312, 313, 314) of a second identification type, wherein the first identification type is selected from a group of output identification types and wherein the second identification type is selected from a group of target identification types, wherein, for carrying out the of the conversion, a conversion request (101) is supplied by a usage entity (10) of a conversion entity (20) and a conversion response (111) is supplied to the usage entity (10) by the conversion entity (20), **characterised in that** the conversion requests (101) and/or the conversion responses (111) for any one pair of the first identification type is provided from the group of output identification types and the second identification type from the group of target identification types in accordance with a uniform standard protocol, wherein the conversion entity (20) has a control layer (30), wherein the control layer (30) has a plurality of conversion interfaces (31, 32, 33, 34) for different identification types, wherein the conversion entity (20) has a plurality of resolution entities (41, 42, 43, 44), wherein a resolution entity (41, 42, 43, 44) is allocated to each conversion interface (31, 32, 33, 34) such that the first identification information (301, 302, 303, 304) of the first identification type is supplied to the resolution entity (41, 42, 43, 44) by the conversion interface(31, 32, 33, 34) and the second identification information (311, 312, 313, 314) of the second information type is supplied to the conversion interface (31, 32, 33, 34) by the resolution entity (41, 42, 43, 44), wherein different request protocols are provided between conversion interfaces (31, 32, 33, 34) allocated to one another and resolution entities (41, 42, 43, 44) for different pairs of first and second identification types.

11. Communication network (3) in accordance with claim 10, **characterised in that** the conversion request (101) and/or the conversion response (111) is provided in accordance with the SOAP protocol, Simple Object Activation Protocol.

12. Communication network in accordance with claims 10 or 11, **characterised in that** the different request protocols are provided in accordance with the DNS standard, Domain Name System, and/or according to the RADIUS standard, Remote Authentication Dial-In User Service, and and/or according to the DIAMETER standard, RFC 3588, and/or according to the SIP standard, Session Initiation Protocol.

13. Communication network (3) in accordance with one of the claims 10 to 12, **characterised in that** different types of databases are assigned to different resolution entities (41, 42, 43, 44), wherein the request protocols are different, depending on the database type of the associated database.

## Revendications

1. Procédé de conversion d'une première information d'identification (301, 302, 303, 304) d'un premier type d'identification en une seconde information d'identification (311, 312, 313, 314) d'un second type d'identification, le premier type d'identification étant sélectionné dans un groupe de types d'identification de départ et le second type d'identification dans un groupe de types d'identifications de destination, dans lequel, pour réaliser la conversion, une demande de conversion (101) est communiquée par une instance d'utilisation (10) à une instance de conversion (20) et une réponse de conversion (111) est communiquée par l'instance de conversion (20) à l'instance d'utilisation (10), **caractérisé en ce que** les demandes de conversion (101) et/ou les réponses de conversion (111) pour n'importe quelle paire de premier type d'identification du groupe des types d'identifications de départ et de second type d'identification du groupe des types d'identification de destination sont prévues suivant un protocole standard uniforme, l'instance de conversion (20) présentant une couche de conversion (30), la couche de conversion (30) présentant une pluralité d'interfaces de conversion (31, 32, 33, 34) pour différents types d'identification, l'instance de conversion (20) présentant une pluralité d'instances de définition (41, 42, 43, 44), étant affectée respectivement à une interface de conversion (31, 32, 33, 34) une unité de définition (41, 42, 43, 44) de manière à ce que la première information d'identification (301, 302, 303, 304) du premier type d'identification soit communiquée à l'unité de définition (41, 42, 43, 44) par l'interface de conversion (31, 32, 33, 34) et que la seconde information d'identification (311, 312, 313, 314) du second type d'identification soit communiquée à l'interface de conversion (31, 32, 33, 34) par l'unité de définition (41, 42, 43, 44), des protocoles d'interrogation étant prévus entre les unités de conversion (31, 32, 33, 34) et les unités de définition (41, 42, 43, 44) affectées les unes aux autres pour différentes paires de premier et second types d'identification.

2. Procédé selon la revendication 1, **caractérisé en ce que** la demande de conversion (101) et/ou la réponse de conversion (111) sont prévues suivant le protocole SOAP, Simple Object Activation Protocol (protocole d'activation d'objet unique).

3. Procédé selon la revendication 1, **caractérisé en ce que** les différents protocoles d'interrogation sont prévus suivant la norme DNS, Domaine Name System (système du nom de domaine) et/ou suivant la norme RADIUS, Remote Authentification Dial-in Service (service de numérotation à authentification à distance) et/ou suivant la norme DIAMETER, RFC 3588, et/ou suivant la norme SIP, Session Initiation Protocol (protocole d'initiation de session).

4. Procédé selon une des revendications précédentes, **caractérisé en ce que**, entre une pluralité d'interfaces de conversion (31, 32, 33 34) et une pluralité d'unités de définition (41, 42, 43, 44), des informations d'identification et, sous la commande de la couche de commande (30), une conversion entre au moins trois types d'identifications différents est effectuée pour réaliser la conversion de la première information d'identification (301, 302, 303, 304) du premier type d'identification du groupe des types d'identifications de départ en seconde information d'identification (311, 312, 313, 314) du second type d'identification du groupe des identifications de destination.

5. Procédé selon une des revendications précédentes, **caractérisé en ce que** sont affectés à différentes unités de définition (41, 42, 43, 44) des types différents de banques de données, les protocoles d'interrogation étant différents en fonction du type de banque de données de la banque de données affectée.

6. Dispositif d'interface pour réseau de communication (3) pour la conversion d'une première information d'identification (301, 302, 303, 304) d'un premier type d'identification en une seconde information d'identification (311, 312, 313, 314) d'un second type d'identification, le premier type d'identification étant sélectionné dans un groupe d'identifications de départ et le second type d'identification dans un groupe d'identifications de destination, le dispositif d'interface étant conçu pour recevoir une demande de conversion (101) et pour envoyer une réponse de conversion (111), **caractérisé en ce que** les demandes de conversion (101) et/ou les réponses de conversion (111) pour n'importe quelle paire de premier type d'identification du groupe des identifications de départ et de second type d'identification du groupe des identifications de destination sont prévues suivant un procédé standard uniforme, étant affectée au dispositif d'interface une instance de conversion (20), l'instance de conversion (20) présentant une couche de commande (30), la couche de commande (30) présentant une pluralité d'interfaces de conversion (31, 32, 33, 34) pour différents types d'identifications, l'instance de conversion (20) comprenant une pluralité d'unités de définition (41, 42, 43, 44), étant affectée respectivement à une interface de conversion (31, 32, 33, 34) une unité de définition (41, 42, 43, 44) de manière à ce que l'interface de conversion (31, 32, 33, 34) soit conçue pour communiquer à l'interface de définition (41, 42, 43, 44) la première information d'identification (301, 302, 303, 304) du premier type d'identification et l'unité de définition (41, 42, 43, 44) pour communiquer à l'interface de conversion (31, 32, 33, 34) la seconde information d'identification (311, 312, 313, 314) du second type d'identification, différents protocoles d'interrogation étant prévus entre des interfaces de conversion (31, 32, 33, 34) et unités de définition (41, 42, 43, 44) affectées les unes aux autres pour différentes paires de premier et second types d'identifications.

7. Dispositif d'interface selon la revendication 6, **caractérisé en ce que** la demande de conversion (101) et/ou la réponse de conversion (111) sont prévues suivant le protocole SOAP, Simple Object Activation Protocol (protocole d'activation d'objet unique).

8. Dispositif d'interface selon la revendication 6 ou 7, **caractérisé en ce que** les différents protocoles d'interrogation sont prévus suivant la norme DNS, Domaine Name System (système du nom de domaine) et/ou suivant la norme RADIUS, Remote Authentification Dial-in Service (service de numérotation à authentification à distance) et/ou suivant la norme DIAMETER, RFC 3588, et/ou suivant la norme SIP, Session Initiation Protocol (protocole d'initiation de session).

9. Dispositif d'interface selon une des revendications 6 à 8, **caractérisé en ce que** sont affectés à différentes unités de définition (41, 42, 43, 44) différents types de banques de données, les protocoles d'interrogation étant différents en fonction du type de banque de données de la banque de données affectée.

10. Réseau de communication (3) comportant une instance de conversion (20) pour convertir une première information d'identification (301, 302, 303, 304) d'un premier type d'identification en une seconde information d'identification (311, 312, 313, 314) d'un second type d'identification, le premier type d'identification étant sélectionné dans un groupe de types d'identifications de départ et le second type d'identification dans un groupe de types d'identifications de destination, dans lequel il est prévu, pour réaliser la conversion, de communiquer une demande de conversion (101) par une instance d'utilisation (10) à l'instance de conversion (20) et de communiquer une réponse de conversion (111) par l'instance de conversion (20) à l'instance d'utilisation (10), **caractérisé en ce que** les demandes de conversion (101) et/ou les réponses de conversion (111) pour n'importe quelle paire de premier type d'identification du groupe des types d'identifications de départ et de second type d'identification du groupe des types d'identifications de destination sont prévues suivant un protocole standard uniforme, l'instance de conversion (20) présentant une couche de commande (30), la couche de commande (30) présentant une pluralité d'interfaces de conversion (31, 32, 33, 34) pour différents types d'utilisation, l'instance de conversion (20) comprenant une pluralité d'unités de définition (41, 42, 43, 44), étant respectivement affectée à une interface de conversion (31, 32, 33, 34) une unité de définition (41, 42, 43, 44) de manière à ce que l'interface de conversion (31, 32, 33, 34) soit conçue pour communiquer à l'unité de définition (41, 42, 43, 44) la première information d'utilisation (301, 302, 303, 304) du premier type d'identification et l'unité de définition (41, 42, 43, 44) pour communiquer à l'interface de conversion (31, 32, 33, 34) la seconde information d'utilisation (311, 312, 313, 314) du second type d'identification, différents protocoles d'interrogation étant prévus entre des interfaces de conversion (31, 32, 33, 34) et des unités de définition (41, 42, 43, 44) affectées les unes aux autres pour différentes paires de premier et second types d'identifications.

11. Réseau de communication (3) selon la revendication 10, **caractérisé en ce que** la demande de conversion (101) et/ou la réponse de conversion (111) sont prévues suivant le protocole SOAP, Simple Object Activation Protocol (protocole d'activation d'objet unique).

12. Réseau de communication (3) selon la revendication 10 ou 11, **caractérisé en ce que** les différents protocoles d'interrogation sont prévus suivant la norme DNS, Domaine Name System (système du nom de domaine) et/ou suivant la norme RADIUS, Remote Authentification Dial-in Service (service de numérotation à authentification à distance) et/ou suivant la norme DIAMETER, RFC 3588, et/ou suivant la norme SIP, Session Initiation Protocol (protocole d'initiation de session).

13. Réseau de communication (3) selon une des revendications 10 à 12, **caractérisé en ce que** sont affectés à différentes unités de définition (41, 42, 43, 44) différents types de banques de données, les protocoles d'interrogation étant différents en fonction du type de banque de données de la banque de données affectée.
